# EUROPEAN PATENT SPECIFICATION

(11) **EP 1 240 056 B1**
(45) Date of publication and mention of the grant of the patent: **11.05.2005**
(21) Application number: 00950669.2
(22) Date of filing: 26.07.2000
(51) Int. Cl.: B60R 21/01, B60R 22/46, B60R 22/195, B60N 2/427

(54) **PASSIVE SAFETY SYSTEM FOR A MOTOR VEHICLE**
PASSIVES SICHERHEITSSYSTEM FÜR EIN KRAFTFAHRZEUG
SYSTEME DE SECURITE PASSIVE POUR VEHICULE AUTOMOBILE

(30) Priority: 21.12.1999 DE 19961799
(43) Date of publication of application: 18.09.2002
(73) Proprietor: Key Safety Systems, Inc., Sterling Heights, Michigan 48314 (US)
(72) Inventor: SPECHT, Martin, D-82340 Feldafing (DE); KILIAN, Thomas, D-82110 Germering (DE)
(74) Representative: Nöth, Heinz
(86) International application number: PCT/US2000/020236
(87) International publication number: WO 2001/045985

(56) References cited:
- EP-A- 0 747 272
- EP-A- 0 800 970
- GB-A- 1 384 988
- US-A- 5 201 385
- US-A- 5 490 691
- US-A- 5 552 986
- US-A- 5 558 370

## Description

The invention relates to a passive safety system for a motor vehicle as set forth in the preamble of claim 1.

In a passive safety system of that kind known from US-A-5 552 986 at least one of the safety devices is designed as a seat belt system which is movable by a associated tensioner drive from a normal state into a safety state in the event of an accident. The tensioner drive comprises a first preloader mechanism for reversible retracting the seat belt from its first position during the normal operation to a second position with a first degree of tension. A precrash sensor system determines the probability of an accident and a controller activates the first preloader and the seat belt system is moved to a safety intermediate position. During that situation the passenger has the opportunity to avoid a vehicle collision and the seat belt system is brought back to the normal state. In the event of an accident a second preloader moves the seat belt system into the safety state with a greater degree of tension and keeps it in the safety state.

An object of the present is to provide a passive safety system of the kind set forth in the opening part of this specification, in which the vehicle occupant is brought into an improved position for a frontal crash.

In accordance with the invention that object is attained by the charactering features of claim 1.

In addition to the movement of the seat belt into the ready position with the aid of the tensioner drive or an additional associated drive (i.e. electric motor drive), also the back rest of the vehicle seat is adjusted by an electric motor to bring the vehicle occupant into an ideal body position (about 21°) for a frontal crash. This can be accomplished, for example, by an electric motor drive of the type described in DE 43 02 042 A1.

In addition to the backrest, the seat substructure, in particular the seat base can also be adjusted to adjust the inclination for the pre-crash adjustment. In particular with the risk of a frontal impact, it is advantageous to adjust the top inclined position of the seat base, preferably with the aid of an electric motor drive. A brushless d.c. motor of the type known from DE 43 02 042 A1 is also suitable for this reversible adjustment.

If a rear crash is threatened, the correct position of the headrest is essential for minimizing the consequences of the crash. An optimized body position for avoiding or reducing consequences resulting from a rear crash is achieved by an electric motor adjustment of the inclination of the back rest combined with the adjustment of the head rest as described, for example, in DE 199 31 894 A1. For example, the headrest can be tilted forward momentarily or the headrest can be driven forward and upward with respect to the position of the backrest, as described, for example in DE 199 31 894 A1. The seatbelt tensioner can also be actuated in such a way that the belt slack, formed as a result of the relative backward movement of the occupant in relation to the backrest, is removed. Positioning of the vehicle occupant in an optimized position is thus achieved before the occurrence of a rear crash. If no rear crash occurs, the components which are momentarily brought into their deployed positions, namely the back rest, the head rest and the seat base, are brought back into their normal positions. An electric motor drive of the type described, for example, in DE 43 02 042 A1 is also suitable for the reversible movement.

Actuators, in particular high performance actuators, on detection of a vehicle roll, can also make the reversible adjustments of the seat belt system.

High-power actuators driven by electric motor are preferably used which produce a rotational or linear movement to bring about the necessary reversible adjustment of the respective safety device.

### Brief Description of the Drawings

Fig. 1 is a block diagram of a passive safety system of a motor vehicle.
Figs. 2 through 6 show first through fifth examples of a safety device.
Fig. 7 is a side view of the embodiment of the safety device shown in Fig. 6.
Fig. 8 shows a sixth example of a safety device.

### Detailed Description of the Invention

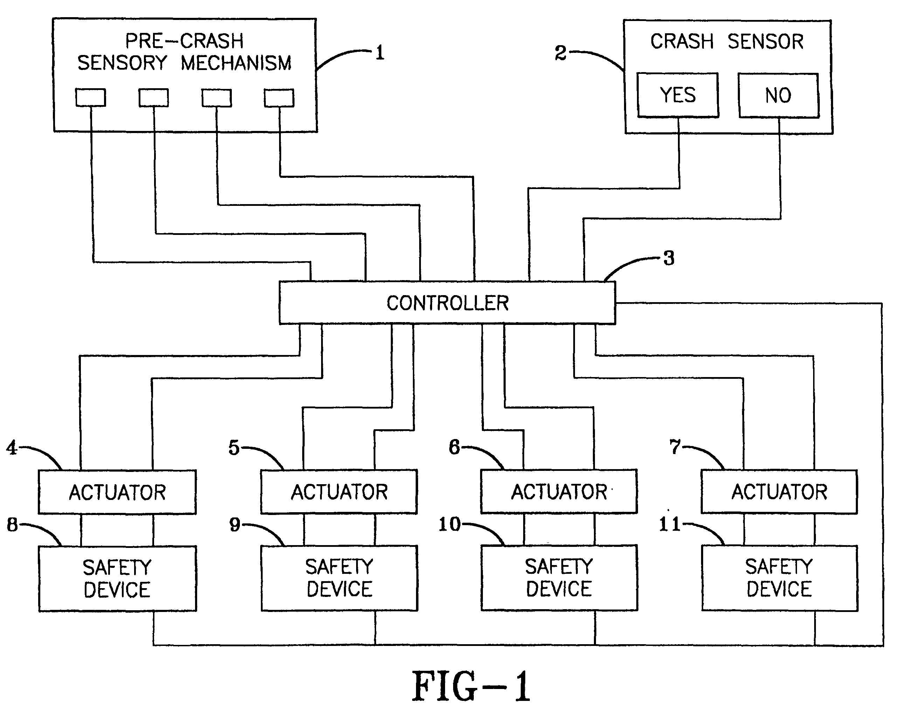

Fig. 1 is a block diagram of a passive safety system having a precrash sensor system 1 with a plurality of precrash sensors which provide, for example, information concerning emergency braking, skidding, different coefficients of friction between the roadway and the individual vehicle wheels, the rebound of a respective vehicle wheel or the angular velocity of steering. External sensors can also be provided for early detection of potential crash causing hazards. Corresponding sensor signals are transmitted to a controller 3. A crash sensor 2 transmits signals to the controller in the event of a crash. If no crash occurs, the crash sensor can deliver a corresponding signal to the controller after a certain time lapse, calculated from the occurrence of the precrash signals, for example 0.5 to a few seconds.

The controller 3 controls the actuation of various safety devices 8, 9, 10 and 11. The respective safety device can be a belt tensioner, an adjusting device for a belt webbing height adjuster, an adjusting device for adjusting the position of the head rest relative to a vehicle back rest, a back rest adjuster, a seat ramp adjuster, an adjuster for the pedals and/or steering column or the like. The safety devices 8 to 11 can have integrated drives which move the respective safety device in the event of a crash from a normal state prevailing during normal travel into the crash-induced deployed state.

The safety devices 8 - 11 are designed in such a way that they can be moved reversibly, at least into a ready state directed toward the crash-induced deployed state. This reversible movement or adjustability of the safety device 8 - 11 can be brought about by the integrated drives which can operate pyrotechnically, mechanically, for example by spring force, electrically, for example by an electric motor or magnet, pneumatically or also hydraulically actuatable. The safety devices 8 - 11 can also be associated with additional actuators 4 - 7 as shown in Fig. 1. The actuators 4 - 7 bring about the reversible movement of the respective safety device into the ready state or deployed state and back into the normal state.

The controller 3 preferably evaluates the precrash signals coming from the precrash sensor system 1, using a computer. If the evaluation shows a critical driving situation that may lead to a frontal impact, side impact, rear crash, or roll over, the controller activates at least the safety devices involved in ensuring the safety of the vehicle occupants in the event of a crash of this type. For this purpose, the safety devices are momentarily brought into their deployed state, or moved into a ready state in the direction of the deployed state, by the integrated drives or the associated actuators 4 - 7. If the crash sensor 2 does not detect a crash after the short time has elapsed, for example about 0.5 seconds or more, the respective safety device is brought back from the deployed state or the safety ready state into the normal state.

The actuators 4 - 7 that reversibly adjust the safety devices can be operated pneumatically, hydraulically, mechanically (for example by spring force) or electrically, in particular by a magnet or an electric motor with a rotary drive or linear drive (preferably an electric motor or electromagnet).

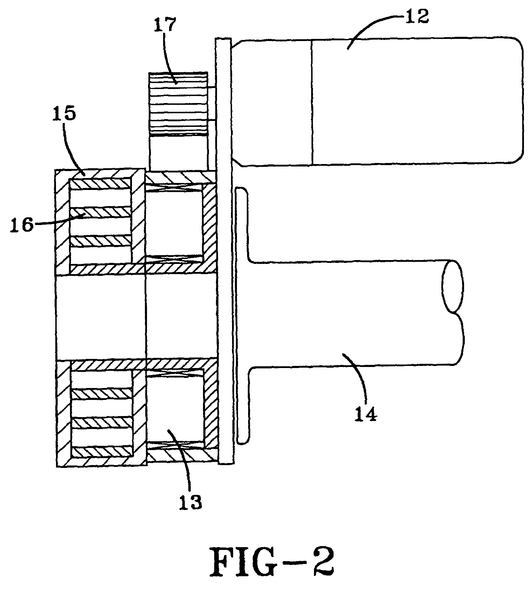

Figs. 2 - 8 show various actuators for producing the reversible adjusting movements in the safety devices.

In Fig. 2 an electric motor drive 12 is provided which, via a gear 13, is able to move a belt reel 14 of a seat belt retractor reversibly in the direction of the deployed state by pretensioning the safety belt wound on the belt reel 14 (not shown in detail)and back again.

The electric motor drive 12 may also adjust a fixing point 15 of a motive spring 16 of the belt retractor preferably acting directly on the belt reel 14. A pinion 17 resting on the motor shaft can have a rotary drive connection, for example via the gear 13, to the fixing point 15. The gear 13 is preferably designed as a self-locking gear, for example a worm gear or planetary gear, and acts as a rotational speed-reducing gear. The fixing point 15 for the motive spring 16 can be adjusted reversibly between its normal position and the deployed position or the ready position. The spring force with which the motive spring 16 acts on the belt reel 14 and therefore on the applied safety belt webbing can be increased momentarily by adjusting the fixing point 15 and can then be brought back into the normal state. The spring force can also be increased in such a way that the motive spring 16 forms a mechanical energy store for power tensioning of the seat belt in the event of a crash.

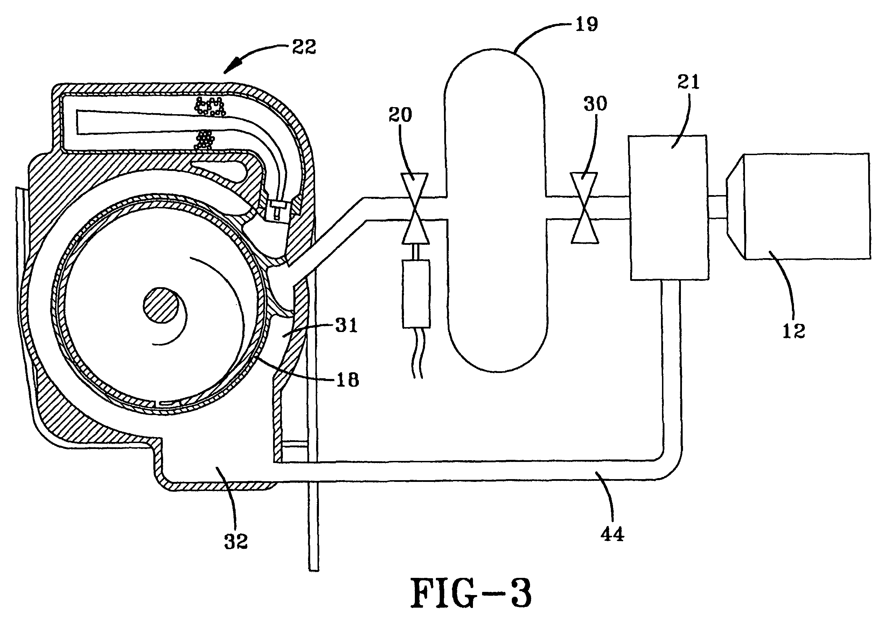

In the example shown in Fig. 3, a pyrotechnically driven seatbelt tensioner drive 22, of the type known, for example, from DE 44 22 980 C2 is adjusted reversibly. A pressure store 19 which can be connected to the respective working chamber 31 of a rotary piston or drive wheel 18 via a valve 20 is used for this purpose. The pressure store 19 can be refilled at any time by a motor-driven pump or compressor 21. A clutch transmits the rotational movement of the drive wheel 18 to the belt reel in a known manner during the movement of the seatbelt tensioner drive by the pressure medium, for example compressed gas, stored in the pressure store 19 or by centrifugal force during the rotation. The belt webbing is momentarily loaded with a specific pull by the rotational movement. If there is no crash, the valve 20, which is preferably actuated electromagnetically, is closed again. The clutch (coupling) disengages so that the belt reel is freely rotatable again relative to the drive wheel 18 of the tensioner drive. A different rotor for the tensioner drive, which can be driven by a propellant gas, can also be used instead of the drive wheel. A hydraulic pressure medium can also be used instead of a pneumatic pressure medium. In this case, hydraulic fluid can be brought back from a reservoir 32 via a line 44 to the pump 21, forming a circuit. There is a non-return valve 30 between the pump (compressor) 21 and the pressure store 19.

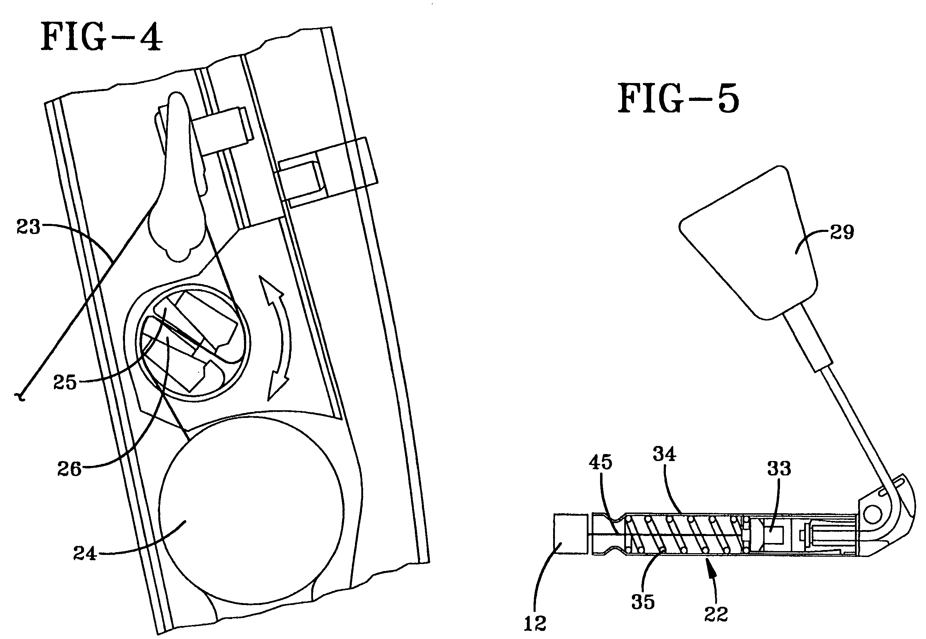

In the example shown in Fig. 4 safety belt webbing 23 is guided away from the belt retractor 24 between two jaws 25, 26 which can be set into rotation, for example by an electric motor. This causes the seat belt 23 to be momentarily tensioned until a specific pull is attained (ready state) during rotation of the jaws.

In the example shown in Fig. 5 a piston 33 of the tensioner drive 22 for a belt buckle 29 is momentarily brought into a ready state by an electric motor drive 12. This causes a specific increased pull to be exerted on the seat belt webbing for a specific period of time, for example up to five seconds. The motor drive 12 is connected to the piston 33 via a traction cable 45. In the event of a crash the tensioner drive 22 is actuated, for example pyrotechnically, and the piston 33 is driven so far in the guide tube 34 that the belt buckle 29 and therefore the seat belt webbing are tensioned in the deployed state. If no crash occurs, the piston 33 is brought from its ready position back into its normal position by a compression spring 35. The belt buckle 29 is then back in its normal position.

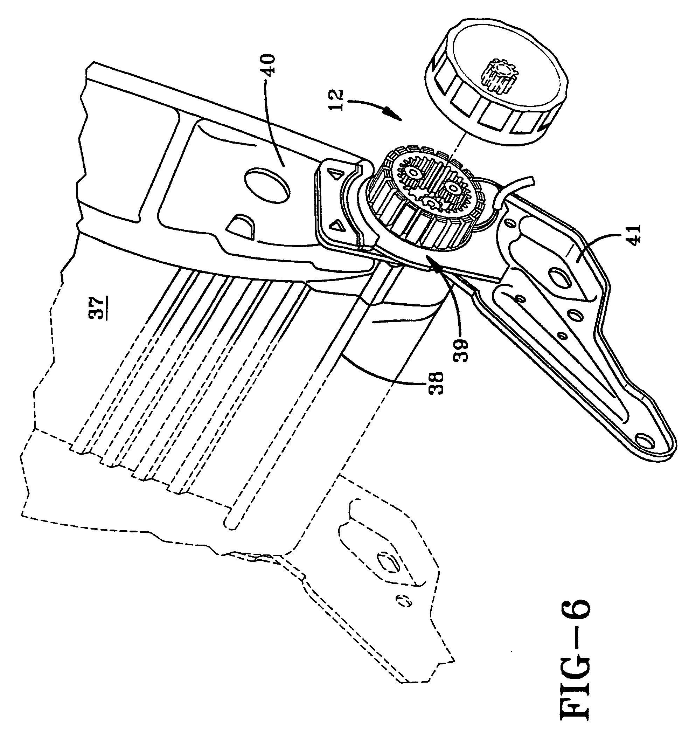

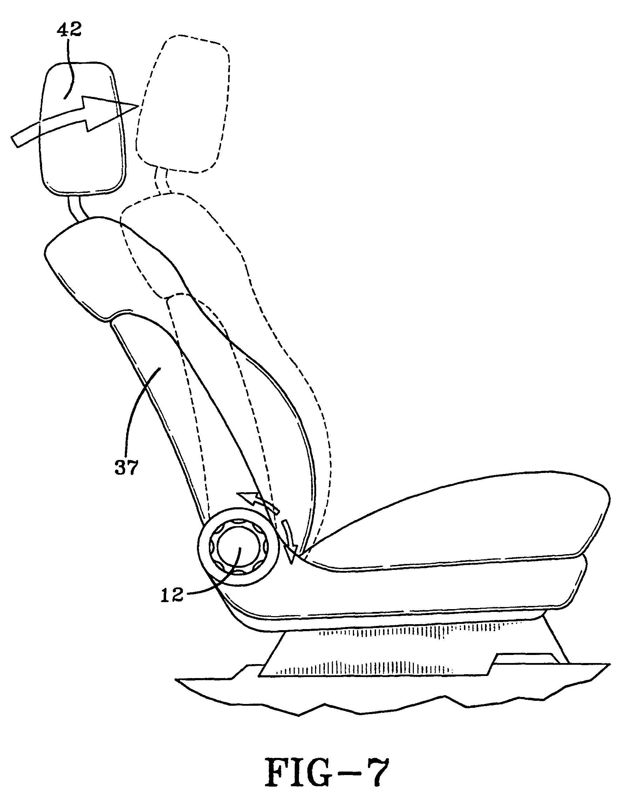

In the embodiment according to the invention shown in Figs. 6 and 7, an electric motor drive 12, which can be arranged on a vehicle seat on one or both sides, acts via a transmission shaft 38 on a back rest 37 of the vehicle seat. The output shaft of the electric motor drive 12 transmits the torque produced by the electric motor drive 12 to an adjusting gear 39 known per se, which is connected to the back rest frame 40. The stator of the electric motor drive is supported on the seat frame 41. The electric motor drive 12 can be designed as a flat-frame motor of the type known, for example, from DE 43 02 042 A1. If the risk of a crash, in particular a rear impact, is detected by the precrash sensor system 1 the electric motor drive 12 is activated. Thus the backrest 37 is brought from a normal position shown in solid lines in Fig. 7 into a safety deployed position shown in broken lines. The headrest 42 can also be adjusted simultaneously in that it is moved forward and upward. The back rest 37 can also be brought into the safety deployed position shown in broken lines in Fig. 7 if there is a risk of a frontal impact. If after a certain period of time, for example about five seconds, no crash occurs, the electric motor drive 12 is activated again and the back rest 37 and the head rest 42 are brought back into their normal positions.

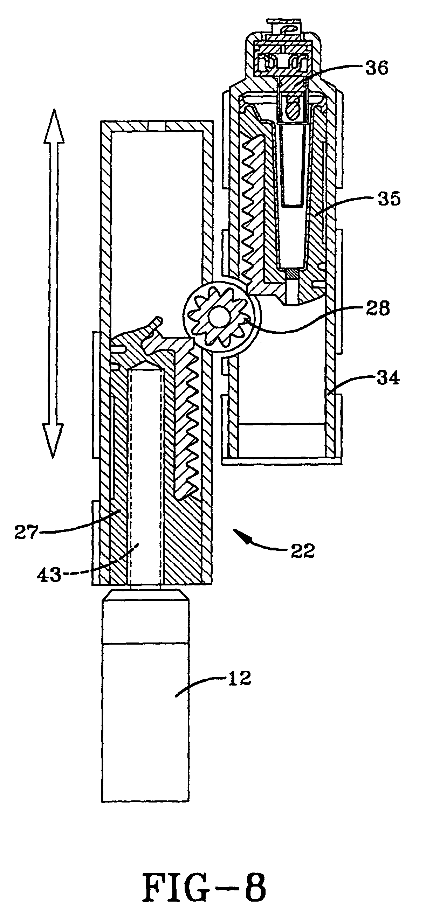

In the example shown in Fig. 8 the tensioner drive 22 has a toothed rack 35 that is driven by a pyrotechnic drive 36 in a guide tube 34 for tensioning a seat belt. The toothed rack 35 acts on a drive wheel 28 that is connected directly or via a gear to the belt reel of a belt retractor. This power tensioning takes place when a crash occurs. A power tensioner with toothed rack drive is known, for example, from EP 0 629 531 A1.

The action of the electric motor drive 12 on an additional toothed rack 27 is controlled as a function of signals from the precrash sensor system 1. For this purpose, the electric motor drive 12 rotates a threaded spindle 43 that engages with an internal thread of the toothed rack 27. The toothed rack 27 is moved upward in Fig. 8 by this operation, so that the seat belt wound onto the belt reel, not shown in detail, is pretensioned by the rotation of the drive wheel 28. Belt slack can be removed, for example, from the seat belt, or the vehicle occupant can be brought from out-of-position into a preferred position in which the risk of injury is reduced. If no crash occurs, the toothed rack 27 is brought back into its normal position by the electric motor drive 12. If a crash occurs, the pyrotechnic propellant 36 is ignited and the toothed rack 35 deploys to accomplish the power tensioning.

## Claims

1. A passive safety system of a motor vehicle with a plurality of safety devices wherein at least one of the safety devices is designed as a seat belt system which is movable by an associated tensioner drive (22) from a normal state into a safety state in the event of an accident, a precrash sensor system (1) with which the probability of an accident can be determined, and a controller that activates the tensioner drive (22) as a function of the signals delivered by the precrash sensor system, wherein the seat belt system is movable in the direction toward its safety state at least to a safety intermediate position and can be brought back reversibly from this safety intermediate position into the normal state and, as a function of the precrash signals, the controller (3) actuates the tensioner drive (22) for a brief movement of the seat belt system into at least the safety intermediate position and then, as a function of the subsequent driving situation, the seat belt system is brought into the safety state and is kept in the safety state or is brought back to the normal state, **characterized in that** an electric motor drive (12) is arranged on a vehicle seat on one or both sides, wherein an output shaft of the electric motor drive (12) transmits the torque produced by the electric motor drive (12) to an adjusting gear (39), which is connected to a back rest frame 40 of a back rest (37) of the vehicle seat, and the stator of the electric motor drive (12) is supported on a seat frame (41), and **in that** the electric motor drive (12) is activated by the precrash sensor system (1) to bring the backrest (37) from a normal position forward into a safety deployed position and if after a certain period of time, no crash occurs, the electric motor drive (12) is activated again and the back rest (37) is brought back into its normal position.

## Patentansprüche

1. Passives Sicherheitssystem eines Kraftfahrzeuges mit: einer Vielzahl von Sicherheitsvorrichtungen, bei denen mindestens eine der Sicherheitsvorrichtungen als ein Sicherheitsgurtsystem konstruiert ist, das mittels eines dazugehörenden Spannelementantriebes (22) aus einem normalen Zustand in einen Sicherheitszustand im Fall eines Unfalles beweglich ist; einem Voraufprallsensorsystem (1), mit dem die Wahrscheinlichkeit eines Unfalles bestimmt werden kann; und einem Regler, der den Spannelementantrieb (22) als Funktion der Signale aktiviert, die vom Voraufprallsensorsystem geliefert werden, wobei das Sicherheitsgurtsystem in der Richtung zu seinem Sicherheitszustand mindestens in eine Sicherheitszwischenposition beweglich ist und aus dieser Sicherheitszwischenposition umkehrbar in den normalen Zustand zurückgebracht werden kann, und als Funktion der Voraufprallsignale betätigt der Regler (3) den Spannelementantrieb (22) für eine kurze Bewegung des Sicherheitsgurtsystems in mindestens die Sicherheitszwischenposition, und danach wird als Funktion der folgenden Antriebssituation das Sicherheitsgurtsystem in den Sicherheitszustand gebracht und im Sicherheitszustand gehalten oder in den normalen Zustand zurückgebracht, **dadurch gekennzeichnet, daß** ein Elektromotorantrieb (12) am Fahrzeugsitz auf einer oder beiden Seiten angeordnet ist, wobei eine Abtriebswelle des Elektromotorantriebes (12) das vom Elektromotorantrieb (12) erzeugte Drehmoment zu einem Stellrad (39) überträgt, das mit einem Rückenlehnenrahmen (40) einer Rückenlehne (37) des Fahrzeugsitzes verbunden ist, und der Stator des Elektromotorantriebes (12) am Sitzrahmen (41) gehalten wird, und dadurch, daß der Elektromotorantrieb (12) durch das Voraufprallsensorsystem (1) aktiviert wird, um die Rückenlehne (37) aus einer normalen Position nach vom in eine sicherheitsausgelöste Position zu bringen und, wenn nach einer bestimmten Zeitdauer kein Aufprall erfolgt, wird der Elektromotorantrieb (12) wieder aktiviert, und die Rückenlehne (37) wird in ihre normale Position zurückgebracht.

## Revendications

1. Système de sécurité passif d'un véhicule automobile, comportant plusieurs dispositifs de sécurité, au moins un des dispositifs de sécurité étant constitué par un système de ceinture de sécurité pouvant être déplacé par un entraînement d'un dispositif de tension associé (22) d'un état normal vers un état de sécurité en cas d'un accident, un système de détection d'un risque de collision (1) permettant de déterminer la probabilité d'un accident, et un dispositif de commande actionnant l'entraînement du dispositif de tension (22) sur la base des signaux émis par le système de détection d'un risque de collision, le système de ceinture de sécurité pouvant être déplacé dans la direction allant vers son état de sécurité, au moins vers une position de sécurité intermédiaire, et pouvant être ramené de manière réversible de cette position de sécurité intermédiaire vers l'état normal, le dispositif de commande (3) actionnant l'entraînement du dispositif de tension (22) sur la base des signaux relatifs à un risque de collision, pour entraîner un bref déplacement du système de ceinture de sécurité vers au moins la position de sécurité intermédiaire, le système de ceinture de sécurité étant ensuite ramené vers l'état de sécurité, sur la base de la situation de conduite ultérieure, et étant retenu dans l'état de sécurité ou ramené vers l'état normal, **caractérisé en ce qu'**un entraînement à moteur électrique (12) est agencé sur un siège du véhicule, sur un côté ou sur les deux côtés, un arbre de sortie de l'entraînement à moteur électrique (12) transmettant le couple produit par l'entraînement à moteur électrique (12) à un engrenage d'ajustement (39) connecté à un cadre de dossier (40) d'un dossier (37) du siège du véhicule, le stator de l'entraînement à moteur électrique (12) étant supporté sur un cadre de siège (41), et **en ce que** l'entraînement à moteur électrique (12) est actionné par le système de détection d'un risque de collision (1) pour ramener le dossier (37) d'une position normale, vers l'avant, dans une position de sécurité déployée, et l'entraînement à moteur électrique (12) étant de nouveau actionné, le dossier (37) étant ramené dans sa position normale en cas d'absence d'une collision, après l'écoulement d'une période de temps définie.
